# EUROPÄISCHE PATENTSCHRIFT

(11) **EP 1 053 971 B1**
(45) Veröffentlichungstag und Bekanntmachung des Hinweises auf die Patenterteilung: **14.06.2006**
(21) Anmeldenummer: 00109823.5
(22) Anmeldetag: 09.05.2000
(51) Int. Cl.: B66F 9/20, B62B 3/06, B62D 51/00

(54) **Deichselkopf für ein Flurförderzeug**
Drawnbarhead for an industrial truck
Tête de timon pour un chariot de manutention

(30) Priorität: 12.05.1999 DE 19922134
(43) Veröffentlichungstag der Anmeldung: 22.11.2000
(73) Patentinhaber: STILL S.A.R.L., 77100 Meaux (FR)
(72) Erfinder: Fabre, Christian, 60360 Auchy la Montagne (FR)
(74) Vertreter: Kasseckert, Rainer

(56) Entgegenhaltungen:
- EP-A- 0 812 799
- EP-A- 0 915 490
- DE-A- 19 601 694
- DE-A- 19 732 890
- DE-U- 9 306 083
- GB-A- 866 833
- PATENT ABSTRACTS OF JAPAN vol. 1998, no. 13, 30. November 1998 (1998-11-30) -& JP 10 203797 A (NIPPON YUSOKI CO LTD), 4. August 1998 (1998-08-04)

## Beschreibung

Die Erfindung betrifft einen Deichselkopf für ein Flurförderzeug mit Schaltelementen zur Steuerung einer vertikalen Bewegung eines Lastaufnahmemittels, wobei mindestens ein Schaltelement für eine Abwärtsbewegung und mindestens ein Schaltelement für eine Aufwärtsbewegung des Lastaufnahmemittels vorgesehen ist, wobei eine Betätigungsfläche eines Schaltelements für die Abwärtsbewegung eine andere Formgebung aufweist, als eine Betätigungsfläche eines Schaltelements für die Aufwärtsbewegung.

Deichselköpfe der genannten Art werden häufig in Mitgänger-Flurförderzeugen oder Fahrerstand-Flurförderzeugen eingesetzt. Während des Betriebs des Flurförderzeugs greift die Bedienperson einen an dem Deichselkopf angeordneten Handgriff. Die Schaltelemente sind z.B. als Mikroschalter oder als Folienschalter ausgeführt und im Inneren des Deichselkopfs angeordnet. Zur Betätigung der Schaltelemente weist der Deichselkopf z.B. Drucktasten auf. Die Oberseiten der Drucktasten bilden die Betätigungsflächen für die Schaltelemente. Die Schaltelemente werden betätigt, indem auf die Betätigungsflächen gedrückt wird. Ebenfalls möglich ist es, anstelle von Drucktasten beispielsweise Kipphebel oder Drehschalter zu verwenden. Die Betätigungsflächen können wahlweise mit den Fingern der den Handgriff greifenden Hand oder mit den Fingern der anderen Hand erreicht und betätigt werden. Hierbei ist es möglich, daß den Schaltelementen für die vertikale Bewegung der Lastaufnahmevorrichtung jeweils eine Betätigungsfläche für die linke Hand und eine Betätigungsfläche für die rechte Hand zugeordnet sind. Die Betätigungsflächen für die selbe Funktion können auf einer gemeinsamen Drucktaste oder auf voneinander unabhängigen Drucktasten vorgesehen sein. Ein typischer Deichselkopf ist beispielsweise in der DE 196 01 694 A1 offenbart. Die DE 197 32 890 A1 offenbart eine mögliche Ausführung der Drucktasten und Schaltelemente. Aus der EP 0 812 799 ist ein Deichselkopf mit Schaltelementen zur Steuerung einer vertikalen Bewegung eines Lastaufnahmemittels bekannt, bei dem eine Betätigungsfläche eines Schaltelements für die Abwärtsbewegung eine andere Formgebung aufweist, als eine Betätigungsfläche eines Schaltelements für die Aufwärtsbewegung. Die gezeigten Schaltelemente sind eben gestaltet und weisen bei ansonsten annähemd identischer Form eine unterschiedliche Größe auf, die es einer Bedienperson ermöglicht, die weiter von einem Handgriff des Deichselkopfes entfernt liegende Schaltfläche bequem zu erreichen.

Die Druckschriften DE 8700486 U und DE 9306083 U zeigen Schaltelemente mit unterschiedlicher Formgebung für gattungsfremde Vorrichtungen.

Im praktischen Einsatz wird die vertikale Bewegung des Lastaufnahmemittels von der Bedienperson häufig blind gesteuert. Das bedeutet, daß der Blick der Bedienperson nicht auf die mit aufgedruckten Symbolen gekennzeichneten Betätigungsflächen, sondern beispielsweise auf die handzuhabende Last gerichtet ist. Diese blinde Betätigung der Schaltelemente erfordert von der Bedienperson ein gewisses Maß an Übung. Fehlbedienungen können jedoch auch bei erfahrenen Bedienern nicht vollständig ausgeschlossen werden.

Der Erfindung liegt daher die Aufgabe zugrunde, einen Deichselkopf zur Verfügung zu stellen, bei dem die Einlemzeit der Bedienpersonen verkürzt und die Gefahr von Fehlbedienungen vermindert ist.

Diese Aufgabe wird erfindungsgemäß dadurch gelöst, daß eine Betätigungsfläche eines Schaltelements für ein Bewegen des Lastaufnahmemittels in eine erste vertikale Richtung eine Erhöhung aufweist und eine Betätigungsfläche eines Schaltelements für ein Bewegen des Lastaufnahmemittels in die entgegengesetzte vertikale Richtung eine Vertiefung aufweist. Die Betätigungsflächen für die Aufwärtsbewegung und die Abwärtsbewegung des Lastaufnahmemittels sind somit für die Bedienperson eindeutig zu ertasten.

Eine besonders sinnfällige Formgebung liegt vor, wenn die Betätigungsfläche eines Schaltelements für eine Aufwärtsbewegung des Lastaufnahmemittels eine Erhöhung aufweist.

Analog hierzu ist es zweckmäßig, wenn die Betätigungsfläche eines Schaltelements für eine Abwärtsbewegung des Lastaufnahmemittels eine Vertiefung aufweist.

Wenn die Betätigungsflächen auf Drucktasten vorgesehen sind, ergibt sich der Vorteil, daß, ein Deichselkopf üblicher Bauart verwendet werden kann. Bei der Herstellung des Deichselkopfs muß lediglich anstelle der herkömmlichen Drucktaste eine Drucktaste mit erfindungsgemäß geformter Betätigungsfläche verwendet werden. Ebenso ist es in einfacher Weise möglich, bereits fertiggestellte Deichselköpfe auf Drucktasten mit erfindungsgemäßer Betätigungsfläche umzurüsten.

Weitere Vorteile und Einzelheiten der Erfindung werden anhand des in den schematischen Figuren dargestellten Ausführungsbeispiels näher erläutert. Dabei zeigt
- Fig. 1: einen erfindungsgemäßen Deichselkopf,
- Fig. 2 und 3: Drucktasten eines erfindungsgemäßen Deichselkopfs.

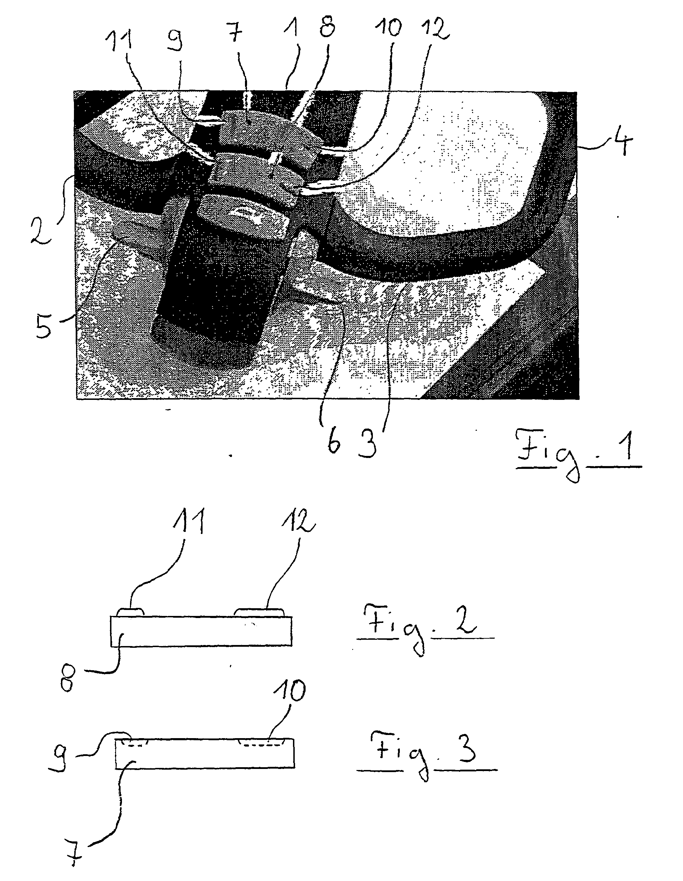

Figur 1 zeigt einen erfindungsgemäßen Deichselkopf für ein Flurförderzeug, bei dem es sich beispielsweise um einen Niederhubwagen, Hochhubwagen oder Niederhubkommissionierer handeln kann. Der Deichselkopf umfaßt einen Mittelabschnitt 1, an dem verschiedene Bedienelemente befestigt sind. Seitlich des Mittelabschnitts sind jeweils Handgriffe 2, 3 angeordnet, die in Handschutzbügel 4 übergehen. Im Bereich der Handgriffe 2, 3 sind Betätigungselemente 5, 6 für einen Fahrschalter vorgesehen, mit dem der Fahrantrieb des Flurförderzeugs gesteuert werden kann.

Auf der Oberseite des Mittelabschnitts 1 befinden sich zwei Drucktasten 7, 8, die mit einem die vertikale Bewegung eines Lastaufnahmemittels steuernden Schaltelement verbunden sind. Die Drucktaste 7 dient zum Steuern einer Abwärtsbewegung des Lastaufnahmemittels, während mit der Drucktaste 8 eine vertikale Aufwärtsbewegung des Lastaufnahmemittels gesteuert werden kann. Die Betätigungsflächen befinden sich im gezeigten Ausführungsbeispiel jeweils in den seitlichen Bereichen der Oberseiten der Drucktasten 7, 8. Die Betätigungsflächen sind hinsichtlich ihrer Lage dadurch definiert, daß sie von der Bedienperson mit einer einen Handgriff 2, 3 greifenden Hand durch Ausstrecken des Zeigefingers erreichbar sind. Es ist dabei für die Funktion des Flurförderzeugs unerheblich, an welcher Betätigungsfläche die jeweilige Drucktaste 7, 8 gedrückt wird, oder ob beispielsweise zwischen die beiden Betätigungsflächen der selben Drucktaste 7, 8 gedrückt wird.

Erfindungsgemäß weist die Drucktaste 7 im Bereich der Betätigungsflächen jeweils eine Vertiefung 9, 10 auf. Hierbei ist die Vertiefung 9 in Querrichtung, die Vertiefung 10 in Längsrichtung zur Drucktaste 7 angeordnet. Die Ausrichtung der Vertiefungen 9, 10 hat jedoch keinen Einfluß auf die durch Drücken der Drucktaste 7 zu erreichende Funktion.

Die Drucktaste 8 weist im Bereich der Betätigungsflächen jeweils eine Erhöhung 11, 12 auf. Die Erhöhung 11 ist in Querrichtung, die Erhöhung 12 in Längsrichtung zur Drucktaste 8 angeordnet. Auch die Ausrichtung der Erhöhungen 11, 12 hat keinen Einfluß auf die durch Drücken der Drucktaste 8 erreichbare Funktion.

Figur 2 zeigt die Drucktaste 8 zur Steuerung der Aufwärtsbewegung des Lastaufnahmemittels im Querschnitt. Zu erkennen sind insbesondere die beiden im Bereich der Betätigungsflächen angeordneten Erhöhungen 11, 12.

In Figur 3 ist die Drucktaste 7 für die Abwärtsbewegung des Lastaufnahmemittels im Querschnitt abgebildet. Mit gestrichelten Linien sind hier die Vertiefungen 9, 10 in den Betätigungsflächen gekennzeichnet.

Die erfindungsgemäße Kennzeichnung der Betätigungsflächen mit Vertiefungen 9, 10 und Erhöhungen 11, 12 erleichtert eine fehlerfreies Bedienen des Flurförderzeugs. Insbesondere kann ein Verwechseln der beiden Drucktasten 8, 9 praktisch ausgeschlossen werden.

## Patentansprüche

1. Deichselkopf für ein Flurförderzeug mit Schaltelementen zur Steuerung einer vertikalen Bewegung eines Lastaufnahmemittels, mit mindestens einem ersten Schaltelement für eine Abwärtsbewegung und mindestens einem zweiten Schaltelement für eine Aufwärtsbewegung des Lastaufnahmemittels vorgesehen ist, wobei eine Betätigungsfläche des ersten Schaltelements für die Abwärtsbewegung eine andere Formgebung aufweist, als eine Betätigungsfläche des zweiten Schaltelements für die Aufwärtsbewegung, **dadurch gekennzeichnet, daß** die Betätigungsfläche eines der beiden Schaltelemente für ein Bewegen des Lastaufnahmemittels in eine erste vertikale Richtung eine Erhöhung (11, 12) aufweist und die Betätigungsfläche des weiteren Schaltelements für ein Bewegen des Lastaufnahmemittels in die entgegengesetzte vertikale Richtung eine Vertiefung (9, 10) aufweist.

2. Deichselkopf nach Anspruch 1, **dadurch gekennzeichnet, daß** die Betätigungsfläche des Schaltelements für eine Aufwärtsbewegung des Lastaufnahmemittels eine Erhöhung (11, 12) aufweist.

3. Deichselkopf nach Anspruch 1 oder 2, **dadurch gekennzeichnet, daß** die Betätigungsfläche des Schaltelements für eine Abwärtsbewegung des Lastaufnahmemittels eine Vertiefung (9, 10) aufweist.

4. Deichselkopf nach einem der Ansprüche 1 bis 3, **dadurch gekennzeichnet, daß** die Betätigungsflächen auf Drucktasten vorgesehen (7, 8) sind.

## Claims

1. Tiller head for an industrial truck having switching elements for controlling a vertical movement of a load-accommodating means, having at least one first switching element for a downwards movement and at least one second switching element for an upwards movement of the load-accommodating means, an actuating face of the first switching element for the downwards movement having a different shape from an actuating face of the second switching element for the upwards movement, **characterized in that** the actuating face of one of the two switching elements for a movement of the load-accommodating means in a first vertical direction has an elevation (11, 12), and the actuating face of the other switching element for a movement of the load-accommodating means in the opposite vertical direction has a depression (9, 10).

2. Tiller head according to Claim 1, **characterized in that** the actuating face of the switching element for an upwards movement of the load-accommodating means has an elevation (11, 12).

3. Tiller head according to Claim 1 or 2, **characterized in that** the actuating face of the switching element for a downwards movement of the load-accommodating means has a depression (9, 10).

4. Tiller head according to one of Claims 1 to 3, **characterized in that** the actuating faces are provided on pushbuttons (7, 8).

## Revendications

1. Tête de timon pour un chariot de manutention comprenant des éléments de commutation pour la commande d'un déplacement vertical d'un moyen de réception de charge, avec au moins un premier élément de commutation pour un déplacement vers le bas et au moins un deuxième élément de commutation pour un déplacement vers le haut du moyen de réception de charge, une surface d'actionnement du premier élément de commutation pour le déplacement vers le bas présentant une autre forme qu'une surface d'actionnement du deuxième élément de commutation pour le déplacement vers le haut, **caractérisée en ce que** la surface d'actionnement de l'un des deux éléments de commutation pour un déplacement du moyen de réception de charge dans une première direction verticale présente un rehaussement (11, 12) et la surface d'actionnement de l'autre élément de commutation pour un déplacement du moyen de réception de charge dans la direction verticale opposée présente un renfoncement (9, 10).

2. Tête de timon selon la revendication 1, **caractérisée en ce que** la surface d'actionnement de l'élément de commutation pour un déplacement vers le haut du moyen de réception de charge présente un rehaussement (11, 12).

3. Tête de timon selon la revendication 1 ou 2, **caractérisée en ce que** la surface d'actionnement de l'élément de commutation pour un déplacement vers le bas du moyen de réception de charge présente un renfoncement (9, 10).

4. Tête de timon selon l'une quelconque des revendications 1 à 3, **caractérisée en ce que** les surfaces d'actionnement sont prévues sur des boutons poussoirs (7, 8).
